# EUROPÄISCHE PATENTSCHRIFT

(11) **EP 1 155 094 B1**
(45) Veröffentlichungstag und Bekanntmachung des Hinweises auf die Patenterteilung: **13.10.2004**
(21) Anmeldenummer: 00904947.9
(22) Anmeldetag: 22.01.2000
(51) Int. Cl.: C09K 3/32, C02F 1/68

(54) **VERFAHREN ZUR BESEITIGUNG VON MINERALÖLKONTAMINATIONEN UND VERWENDUNG VON HANF**
METHOD FOR REMOVING MINERAL-OIL CONTAMINATION AND THE USE OF HEMP
PROCEDE PERMETTANT D'ELIMINER LA CONTAMINATION PAR LES HUILES MINERALES ET UTILISATION DU CHANVRE

(30) Priorität: 28.01.1999 DE 19903291
(43) Veröffentlichungstag der Anmeldung: 21.11.2001
(73) Patentinhaber: Forschungszentrum Karlsruhe GmbH, 76133 Karlsruhe (DE)
(72) Erfinder: OCHSENREITHER, Melanie, D-76774 Leimersheim (DE); ESSIG, Christoph, D-75196 Remchingen (DE); KRÄUTER, Andreas, D-76227 Karlsruhe (DE)
(74) Vertreter: Rückert, Friedrich, Dr.
(86) Internationale Anmeldenummer: PCT/EP2000/000483
(87) Internationale Veröffentlichungsnummer: WO 2000/044850

(56) Entgegenhaltungen:
- WO-A-92/06146
- WO-A-96/03211
- DE-A- 1 769 461
- DE-A- 2 333 012
- US-A- 3 617 564
- US-A- 3 703 464
- DATABASE WPI Section Ch, Week 197721 Derwent Publications Ltd., London, GB; Class A97, AN 1977-36920Y XP002138439 & JP 52 045595 A (JAPAN METALS CH KK), 11. April 1977 (1977-04-11)
- PATENT ABSTRACTS OF JAPAN vol. 007, no. 043 (C-152), 19. Februar 1983 (1983-02-19) & JP 57 195781 A (PIONEER KK;OTHERS: 01), 1. Dezember 1982 (1982-12-01)

## Beschreibung

Die Erfindung betrifft ein Verfahren zur Beseitigung von Mineralölkontaminationen gemäß dem ersten Patentanspruch und die Verwendung von Hanf gemäß dem vierten Patentanspruch.

Bei Schiffsunfällen, insbesondere bei Tankerhavarien, wird die Umwelt massiv durch auslaufendes Mineralöl geschädigt. Ein weiteres Umweltproblem sind Ölverschmutzungen, die in Hafenbecken auftreten.

Diese Mineralölkontaminationen werden bisher im wesentlichen mit zwei verschiedenen Methoden bekämpft.

Der Ölteppich auf Gewässeroberflächen, insbesondere auf der Meeresoberfläche, wird mit Dispersionsmitteln besprüht, die hauptsächlich aus einer Mischung von Detergenzien und Lösungsmitteln bestehen. Die Dispersionsmittel bilden aus dem Ölteppich fein verteilte, im Gewässer suspendierte Tröpfchen, die langsam auf den Gewässerboden absinken. (Internet-Artikel der ITOPF (The International Tanker Owners Pollution Federation Limited), http://www.itopf.com/dispersa.html).

Dieses Verfahren hat eine Reihe von Nachteilen. Durch die Dispersionsmittel wird das Gewässer mit zusätzlichen Chemikalien belastet. Damit die Dispersionsmittel wirksam werden, ist eine Durchmischung mit dem Öl erforderlich. Nicht in allen Fällen reicht hierzu der Wellengang aus. Schließlich wird das Öl nur an der Wasseroberfläche beseitigt, so daß zwar die Gefahr einer Verschmutzung von Tieren und der Uferzonen reduziert wird; am Boden der Gewässer werden Öl und Dispersionsmittel jedoch nur langsam zersetzt. Der Einsatz von Dispersionsmittel in Flachwasserzonen, an Wasserentnahmestellen oder in Fischzuchtgebieten ist daher nicht möglich. Ein weiterer Nachteil ist der hohe Preis der Dispersionsmittel.

Ein anderes Verfahren zur Beseitigung von ausgelaufenem Öl auf Gewässern ist das Verbrennen auf der Wasseroberfläche (Internet-Artikel der ITOPF, http.://www.itopf.com/alternat.html).

Dieses Verfahren ist mit einer großen Rauchentwicklung verbunden. Außerdem werden die Gewässer durch Verbrennungsrückstände belastet.

Aus der WO 92/06146 ist es bekannt, vorbehandeltes natürliches Pflanzenmaterial als Adsorptionsmittel für hydrophobe, mit Wasser nicht mischbare Flüssigkeiten wie z. B. Mineralöl und die daraus gewonnenen Produkte einzusetzen. Die Vorbehandlung umfasst eine chemische Reaktion zur Verbesserung der Adsorptionseigenschaften gegenüber den hydrophoben Flüssigkeiten. Einleitend wird auch auf die - wenn auch eingeschränkte - Eignung einiger nicht vorbehandelter Pflanzenmaterialien als Adsorptionsmittel hingewiesen.

Der Erfindung liegt die Aufgabe zugrunde, ein Verfahren anzugeben, mit dessen Hilfe Mineralölkontaminationen umweltfreundlich und kostengünstig beseitigt werden können. Das Verfahren soll insbesondere keine zusätzliche Umweltbelastung hervorrufen und einfach anwendbar sein. Eine weitere Aufgabe besteht darin, eine Einsatzmöglichkeit für Hanf anzugeben.

Die Aufgabe wird durch das im ersten Patentanspruch beschriebene Verfahren und die im vierten Patentanspruch angegebene Verwendung gelöst. Die weiteren Ansprüche geben bevorzugte Ausführungsformen des Verfahrens und der Verwendung an.

Erfindungsgemäß wird vorgeschlagen, getrockneten Hanf als Adsorptionsmittel für Mineralöl und Mineralprodukte einzusetzen. Mit dem getrockneten und vorzugsweise zerkleinerten oder gemahlenen Hanf werden erfindungsgemäß die mit Mineralöl kontaminierten Flächen bestreut und das Hanf/Mineralölgemisch von den behandelten Flächen entfernt.

Bevorzugt wird für das Verfahren der landwirtschaftlich angebaute Faserhanf (Cannabis sativa) eingesetzt. In besonderer Weise eignen sich die sogenannten Hanfschäben des Faserhanfs als Adsorptionsmittel für Mineralöl und Mineralölprodukte. Die traditionelle Aufbereitungsmethode von Hanf ist das "Rösten" auf dem Feld. Die grünen Hanfpflanzen werden ausgebreitet und getrocknet, wobei im Verlauf des Trocknungsprozesses eine mehrmalige Befeuchtung durch Tau oder Niederschläge durchaus erwünscht ist. Dadurch wird die Trennung des Faseranteils von den Schäben erleichtert. Stofflich verwertet werden bislang die Hanffasern und die Hanfsamen. Der holzige Anteil des Hanfstengels, die Schäben, die 60 bis 70 % des Ertrages ausmachen, wurden bisher als Abfall angesehen. Die Schäben werden bevorzugt vor der Verwendung als Adsorptionsmittel grob gemahlen, so daß sich ein körniges Produkt ergibt.

Hanf eignet sich insbesondere zur Beseitigung von Ölverschmutzungen auf Gewässern. Hierzu werden die ölverschmutzten Wasserflächen von einem Schiff oder einem Flugzeug aus mit Hanf bestreut. Vorzugsweise wird eine Einwirkungszeit von 15 Minuten bis eine Stunde abgewartet, wonach der Hanf zusammen mit dem adsorbierten Mineralöl von der Wasseroberfläche durch Absaugen, Abschöpfen oder durch andere an sich bekannte Verfahren abgetrennt wird. Die Erfindung ist jedoch nicht auf die Beseitigung von Mineralölkontaminationen auf dem Meer oder auf anderen Gewässern beschränkt. In gleicher Weise können Ölverschmutzungen auf festen Oberflächen, etwa auf Straßen oder Plätzen, entfernt werden. An Hanf können neben Rohöl auch Mineralölprodukte wie Motoren- oder Dieselöl adsorbiert werden.

Für die weitere Behandlung des Gemenges aus Hanf und Mineralöl stehen mehrere Möglichkeiten zur Verfügung. Das Gemenge kann beispielsweise in einer Verbrennungsanlage, etwa einer Müllverbrennungsanlage, verbrannt werden. Alternativ kann der Mineralölanteil mit einem geeigneten Lösungsmittel, etwa Cyclohexan, extrahiert werden, wonach das Lösungsmittel durch Destillation wieder abgetrennt und erneut zur Extraktion eingesetzt wird.

Hanf bietet als Adsorptionsmittel für ein Verfahren zur Beseitigung von Mineralölkontaminationen eine Reihe von Vorteilen. Es ist umweltfreundlich, weil kein Einsatz von Chemikalien notwendig ist und keine umweltgefährdenden Stoffe entstehen. Das Verfahren ist billig, da insbesondere für die Hanfschäben keine Verwendungsmöglichkeiten bekannt sind. Hanf ist zudem ein sehr wirkungsvolles Adsorptionsmittel für Mineralöl. An Hanf kann ein Mehrfaches seines Gewichtes adsorbiert werden. Körnige Hanfschäben lassen sich in gleicher Weise auf die ölverschmutzten Flächen ausbringen wie die Dispersionsmittel. Der errindungsgemäße Einsatz von Hanf eröffnet zudem die Möglichkeit, brachliegende Ackerflächen wieder zu bepflanzen. Hierfür ist Hanf besonders geeignet, da der Einsatz von Unkrautbekämpfungs- oder Pflanzenschutzmitteln wie etwa bei Chinaschilf nicht erforderlich ist und Hanf als anspruchslose Kulturpflanze keine besonderen Anforderungen an Wärme, Feuchtigkeit und Nährstoffe stellt.

Die Erfindung wird im folgenden anhand von Ausführungsbeispielen näher erläutert.

In Vorversuchen zur Adsorption von Mineralöl und Mineralölprodukten mit nachwachsenden Rohstoffen hat sich Hanf als das wirkungsvollste Adsorptionsmittel erwiesen. Es ist bedeutend wirksamer als etwa Chinaschilf.

### Beispiel 1:

In einem Becherglas wurden 150 g destilliertes Wasser vorgelegt. Anschließend wurde das Wasser mit 29 g Motorenöl versetzt. Schäben von Faserhanf (Cannabis sativa) wurden gemahlen, bis eine Korngröße von ca. 4 mm erreicht wurde. Der dadurch hergestellte Hanfschrot (3,7 g) wurde gleichmäßig auf das auf dem Wasser schwimmende Motorenöl aufgestreut. Danach wurde eine Einwirkungszeit abgewartet, die zwischen 15 und 45 Minuten betrug. Danach wurde das Hanf/Wasser/Öl-Gemenge durch ein Sieb mit einer Porengröße von 1,4 mm geschüttet. Nach einer Abtropfzeit im Bereich von 30 bis 60 Minuten wurde das Hanf/Öl-Gemenge in eine Filterhülse umgefüllt, gewogen, in eine 250 ml-Soxhletapparatur eingesetzt und mit Cyclohexan als Lösungsmittel extrahiert. Danach wurde die Hülse mit dem Hanf bei 70°C 24 Stunden lang getrocknet und anschließend gewogen. Es zeigte sich, daß 1 g Hanf ca. 6 g Motorenöl adsorbiert hatte.

### Beispiel 2:

Der Versuch gemäß Beispiel 1 wurde mit Rohöl wiederholt. Eine Änderung der Adsorptionseigenschaften konnte nicht festgestellt werden.

### Beispiel 3:

Der Versuch gemäß Beispiel 2 wurde mit Rheinwasser und mit Salzwasser (3,5 Gew.-% Kochsalzanteil) wiederholt. Auch hierbei konnte keine Änderung der Adsorptionseigenschaften festgestellt werden.

### Beispiel 4:

Das gemäß Beispiel 1 aus dem Sieb mit dem Hanf/Wasser/Öl-Gemenge ablaufende Wasser enthielt noch geringe Mengen an Motorenöl. Durch erneute Zugabe von Hanfschrot konnte das verbliebene Motorenöl nahezu restlos beseitigt werden.

## Patentansprüche

1. Verfahren zur Beseitigung von Mineralölkontaminationen, bei dem mit Mineralöl kontaminierte Flächen mit getrocknetem Hanf bestreut werden und der Hanf gemeinsam mit dem Öl abgetrennt wird.

2. Verfahren nach Anspruch 1, bei dem die kontaminierte Fläche eine Gewässeroberfläche ist.

3. Verfahren nach Anspruch 1 oder 2, bei dem Hanf eingesetzt wird, aus dem zuvor der Faseranteil abgetrennt wurde.

4. Verwendung von getrocknetem Hanf als Adsorptionsmittel für Mineralöl oder Mineralölprodukte.

5. Verwendung nach Anspruch 4 mit Hanf, aus dem zuvor der Faseranteil abgetrennt wurde.

## Claims

1. Method for the removal of mineral oil contaminations, in which surfaces which are contaminated with mineral oil are sprinkled with dried hemp and the hemp and the oil are severed together.

2. Method according to claim 1 in which the contaminated surface is the surface of a body of water.

3. Method according to claim 1 or 2 in which hemp is used from which the fibrous portion has previously been separated.

4. Use of dried hemp as an adsorption agent for mineral oil or mineral oil products.

5. Use according to claim 4, employing hemp from which the fibrous portion has previously been separated.

## Revendications

1. Procédé permettant d'éliminer des contaminations par du pétrole, selon lequel des surfaces contaminées par du pétrole sont épandues de chanvre séché et chanvre et pétrole sont séparés, ensemble.

2. Procédé selon la revendication 1,
selon lequel la surface contaminée est une surface aquatique.

3. Procédé selon la revendication 1 ou 2,
selon lequel on utilise du chanvre dont, auparavant, la partie fibreuse a été séparée.

4. Utilisation de chanvre séché comme moyen d'adsorption pour du pétrole ou des produits pétroliers.

5. Utilisation selon la revendication 4, avec du chanvre dont, auparavant, la partie fibreuse a été séparée.
